# EUROPÄISCHE PATENTSCHRIFT

(11) **EP 4 293 325 B1**
(45) Veröffentlichungstag und Bekanntmachung des Hinweises auf die Patenterteilung: **20.08.2025**
(21) Anmeldenummer: 23178448.9
(22) Anmeldetag: 09.06.2023
(51) Int. Cl.: G01F 1/66, G01F 1/667

(54) **ULTRASCHALLDURCHFLUSSMESSGERÄT**
ULTRASONIC FLOW MEASURING DEVICE
DÉBITMÈTRE À ULTRASONS

(30) Priorität: 14.06.2022 DE 102022114985
(43) Veröffentlichungstag der Anmeldung: 20.12.2023
(73) Patentinhaber: Krohne AG, 4019 Basel (CH)
(72) Erfinder: van Klooster, Jeroen Martin, 4005 GN Tiel (NL); Huijzer, Arie, 3363 BS Sliedrecht (NL); Schipper, Willemjin, 3353 VA Papendrechcht (NL)
(74) Vertreter: Gesthuysen Patentanwälte

(56) Entgegenhaltungen:
- CN-A- 109 073 431
- DE-A1- 102010 064 117
- DE-A1- 102016 111 133
- DE-A1- 4 011 526
- US-A- 3 109 112
- US-A1- 2010 011 866
- US-B2- 6 871 148

## Beschreibung

Die Erfindung betrifft ein Ultraschalldurchflussmessgerät zur Bestimmung des Durchflusses eines Mediums, mit wenigstens einem Ultraschallwandlerpaar aufweisend einen ersten Ultraschallwandler und einen zweiten Ultraschallwandler, wobei der erste Ultraschallwandler und der zweite Ultraschallwandler zum Senden und/oder zum Empfangen von Ultraschallsignalen ausgebildet sind, wobei der erste Ultraschallwandler ein erstes Wandlergehäuse und ein in dem ersten Wandlergehäuse angeordnetes erstes Wandlerelement zur Erzeugung und/oder zum Empfangen von Ultraschallsignalen aufweist, wobei der zweite Ultraschallwandler ein zweites Wandlergehäuse und ein in dem zweiten Wandlergehäuse angeordnetes zweites Wandlerelement zur Erzeugung und/oder zum Empfangen von Ultraschallsignalen aufweist, wobei das erste Wandlergehäuse und das zweite Wandlergehäuse zumindest teilweise mechanisch schwingfähig ausgebildet sind und zur Signalabstrahlung bzw. Signaleinkopplung zumindest teilweise zu mechanischen Schwingungen angeregt werden, und mit einer Steuer- und Auswerteeinheit zum Steuern der Ultraschallwandler und zum Auswerten eines den Durchfluss charakterisierenden Messsignals.

Das Dokument DE 4 011 526 A1 offenbart ein Beispiel eines Ultraschall-Durchflussmessers aus dem Stand der Technik mit zwei Wandlern mit zwei unterschiedlichen Frequenzen.

Ultraschalldurchflussmessgeräte der in Rede stehenden Art sind in einer Vielzahl aus dem Stand der Technik bekannt. Bei aus dem Stand der Technik verwendeten Messsystemen werden in der Regel wenigstens zwei baugleiche Ultraschallwandler eingesetzt, wobei wenigstens einer der Ultraschallwandler als Sender ausgebildet ist und einer der Ultraschallwandler als Empfänger ausgebildet ist. Meist können beide Ultraschallwandler sowohl Sender als auch Empfänger sein.

Zudem sind aus dem Stand der Technik im Wesentlichen zwei Arten von Ultraschallwandlern bekannt, nämlich zum einen solche Ultraschallwandler, bei denen das Wandlerelement im Wesentlichen unmittelbar auf einem Ultraschallfenster des Ultraschallwandlers angeordnet ist, über das die Ultraschallsignale in das Medium gesendet werden und die keine explizit zu Schwingungen anregbare und das Abstrahlverhalten des Ultraschallwandlers dominierende mechanische Oszillatoren aufweisen. Ein solcher Ultraschallwandler ist beispielsweise aus der US 7,992,439 B2 bekannt. Das Abstrahlverhalten solcher Ultraschallwandler wird im Wesentlichen durch die elektrische Anstreuerung des Wandlerelements bestimmt.

Zum Anderen sind Ultraschallwandler bekannt, wie beispielsweise aus der DE 10 2016 107 471 B3, bei denen die Wandlergehäuse zumindest teilweise schwingfähig ausgebildet sind und deren Gehäuse zur Signaleinkopplung oder Signalerzeugung zu mechanischen Schwingungen angeregt werden. Die Eigenfrequenzen eines solchen Ultraschallwandlers sind unmittelbar abhängig von der konstruktiven Ausgestaltung des Ultraschallwandlers, sodass das Schwingungsverhalten von der konstruktiven Ausgestaltung dominiert wird.

Nachteilig bei einem derartigen Messsystem ist, dass das von der Steuer- und Auswerteeinheit auszuwertende Messsignal schmalbandig ist, da sowohl der als Sender fungierende Ultraschallwandler als auch der als Empfänger fungierende Ultraschallwandler ein gleiches Schwingungsverhalten zeigen, insbesondere die gleichen Eigenfrequenzen aufweisen. Ein schmalbandiges Messsignal ist problematisch auszuwerten, sodass man bestrebt ist, anstatt eines schmalbandigen Messsignals ein Messsignal mit einer größeren Bandbreite zu erzeugen. Dies wird bei den Ultraschallwandlern der ersten Art beispielsweise dadurch realisiert, dass durch elektronische Komponenten zusätzliche Eigenfrequenzen erzeugt werden. Nachteilig an der aus dem Stand der Technik bekannten Lösung ist, dass sie aufgrund der elektronischen Komponenten anfällig gegenüber Störungen ist und zudem aufgrund der elektronischen Komponenten eine Temperaturabhängigkeit des Messsignals zu beobachten ist.

Da bei den Ultaschallwandlern der zweiten Art das Schwingungsverhalten und insbesondere die Eigenfrequenzen des Ultraschallwandlers durch die konstruktive Ausgestaltung dominiert wird, ist ein solches Beeinflussen des Schwingungsverhaltens durch elektronische Komponenten nicht im gewünschten Maße ohne Weiteres realisierbar.

Demnach liegt der Erfindung die Aufgabe zugrunde, ein Ultraschalldurchflussmessgerät bereitzustellen, bei dem die aus dem Stand der Technik bekannten Nachteile reduziert werden.

Die Aufgabe ist erfindungsgemäß zunächst und im Wesentlichen dadurch gelöst, nämlich mit den Merkmalen des Kennzeichnungsteils des Patentanspruchs 1, dass wenigstens der erste Ultraschallwandler ein erstes mechanisches Schwingungsbeeinflussungselement zum Beeinflussen des Schwingungsverhaltens des ersten Ultraschallwandlers aufweist und dass das mechanische Schwingungsbeeinflussungselement das Schwingungsverhalten des ersten Ultraschallwandlers derart beeinflusst, dass die Eigenfrequenzen des ersten Ultraschallwandlers relativ zu den Eigenfrequenzen des zweiten Ultraschallwandlers frequenzverschoben sind, derart, dass das den Durchfluss charakterisierende Messsignal, das aus dem den ersten Ultraschallwandler und den zweiten Ultraschallwandler durchlaufenden gesendeten Ultraschallsignal resultiert, breitbandig ist, jedenfalls breitbandiger als nach Durchlaufen nur eines der Ultraschallwandler.

Erfindungsgemäß ist erkannt worden, dass das Schwingungsverhalten wenigstens des ersten Ultraschallwandlers auf einfache Art und Weise durch ein zusätzliches mechanisches Schwingungsbeeinflussungselement beeinflusst werden kann. Wenn die Rede ist von einem mechanischen Schwingungsbeeinflussungselement, dann wird dadurch verdeutlicht, dass erfindungsgemäß das Schwingungsverhalten nicht durch elektronische Bauteile oder eine andere elektrische Ansteuerung des Wandlerelements beeinflusst wird, sondern durch eine zusätzliche "Masse", die das Schwingungsverhalten des Ultraschallwandlers mechanisch beeinflusst.

Um den gewünschten Effekt der Aufweitung des Messsignals zu einem breitbandigen Messsignal zu erzielen, ist es notwendig, dass die Eigenfrequenzen des ersten Ultraschallwandlers und die Eigenfrequenzen des zweiten Ultraschallwandlers in einem abgestimmten Verhältnis zueinander liegen. Die Eigenfrequenzen dürfen hierbei insbesondere nicht zu weit auseinanderliegen. Besonders bevorzugt ist erfindungsgemäß vorgesehen, dass die Eigenfrequenzen des ersten Ultraschallwandlers und des zweiten Ultraschallwandlers im Bereich von 15 bis 30 Prozent voneinander abweichen. Erfindungsgemäß ist erkannt worden, dass so eine optimale Aufweitung des Messsignals, also eine optimale Breitbandigkeit erzeugt werden kann.

Erfindungsgemäß ist in einer Ausgestaltung vorgesehen, dass das mechanische Schwingungsbeeinflussungselement zumindest mittelbar mit dem Wandlergehäuse des ersten Ultraschallwandlers verbunden ist. Dies kann auf verschiedene Art und Weise realisiert sein.

In einer ersten erfindungsgemäßen Variante ist das mechanische Schwingungsbeeinflussungselement lösbar mit dem ersten Wandlergehäuse verbunden. Dies bietet den Vorteil, dass das mechanische Schwingungsbeeinflussungselement auf einfache Art und Weise austauschbar ist. Besonders bevorzugt ist das mechanische Schwingungsbeeinflussungselement durch eine Steckverbindung oder eine Schraubverbindung mit dem Wandlergehäuse verbunden. Ebenfalls bevorzugt ist in einer anderen Variante die Verbindung zwischen Wandlergehäuse und Schwingungsbeeinflussungselement durch eine Rastverbindung oder eine Bajonettverbindung realisiert.

In einer anderen erfindungsgemäßen Ausführungsform ist das mechanische Schwingungsbeeinflussungselement unlösbar mit dem ersten Wandlergehäuse verbunden. Besonders bevorzugt ist eine derartige unlösbare Verbindung durch eine Schweißverbindung oder eine Pressverbindung realisiert. In einer alternativen Variante ist das mechanische Schwingungsbeeinflussungselement einstückig mit dem Wandlergehäuse ausgebildet. Das mechanische Schwingungsbeeinflussungselement und das Wandlergehäuse sind also in dieser Variante aus einem einzigen Werkstück gefertigt. Die Realisierung einer unlösbaren Verbindung zwischen Schwingungsbeeinflussungselement und Wandlergehäuse weist den Vorteil auf, dass sich das Schwingungsbeeinflussungselement durch die Schwingungen des Wandlergehäuses im Betrieb des Ultraschallwandlers nicht von dem Wandlergehäuse lösen kann und seine Position relativ zum Wandlergehäuse nicht verändern kann, wodurch sich das Schwingungsverhalten verändern könnte.

In einer besonders bevorzugten Ausführungsform des erfindungsgemäßen Ultraschalldurchflussmessgerätes ist das mechanische Schwingungsbeeinflussungselement an dem dem Medium zugewandten Ende des Ultraschallwandlers angeordnet.

Das mechanische Schwingungsbeeinflussungselement selbst kann erfindungsgemäß auf unterschiedliche Art und Weise realisiert sein. In einer ganz besonders bevorzugten Ausgestaltung ist das mechanische Schwingungsbeeinflussungselement als Hülse ausgebildet. Besonders bevorzugt ist in einer Variante die Hülse als Federelement ausgebildet. Weiter bevorzugt ist die Hülse dann als Spiralfeder, als Torsionsfeder, als Wellenfeder oder als Tellerfeder realisiert.

In einer anderen erfindungsgemäßen Ausführungsform ist das mechanische Schwingungsbeeinflusungselement als Massering ausgebildet und weist weiter bevorzugt in Umfangsrichtung eine geschlossene Oberfläche auf.

Eine weitere erfindungsgemäße Ausführungsform zeichnet sich dadurch aus, dass das als Hülse ausgebildete Schwingungsbeeinflussungselement vertikale Materialaussparungen aufweist. Diese Materialaussparungen können beispielsweise als Schlitze realisiert sein. Besonders bevorzugt sind die Materialaussparungen senkrecht zur Umfangsrichtung der Hülse angeordnet. Weiter bevorzugt sind mehrere vertikale Materialaussparungen vorgesehen und sind ferner diese Materialaussparungen gleichmäßig über den Umfang der Hülse verteilt angeordnet.

Um das Schwingungsverhalten des ersten Ultraschallwandlers weiter zu beeinflussen, ist in einer Ausführungsform zwischen dem Wandlergehäuse und dem mechanischen Schwingungsbeeinflussungselement ein Dämpfungsmaterial angeordnet. Das Dämpfungsmaterial ist beispielsweise als Dämpfungsfolie realisiert. Als Dämpfungsmaterial eignet sich besonders die Verwendung von Graphit. Jedoch ist die Erfindung nicht auf die Verwendung von Graphit beschränkt.

Bisher ist beschrieben worden, dass der erste Ultraschallwandler ein mechanisches Schwingungsbeeinflussungselement aufweist, um so zu erzielen, dass die Eigenfrequenzen des ersten Ultraschallwandlers und die Eigenfrequenzen des zweiten Ultraschallwandlers voneinander verschieden sind. In einer ganz besonders bevorzugten Ausgestaltung des erfindungsgemäßen Ultraschalldurchflussmessgerätes weist auch der zweite Ultraschallwandler ein mechanisches Schwingungsbeeinflussungselement, nämlich ein zweites mechanisches Schwingungsbeeinflussungselement zum Beeinflussen des Schwingungsverhaltens des zweiten Ultraschallwandlers auf. Das zweite Schwingungsbeeinflussungselement ist zumindest mittelbar mit dem zweiten Wandlergehäuse verbunden. Um den erfindungsgemäßen Effekt, nämlich die Aufweitung des Messsignals zu einem breitbandigen Messsignal, weiterhin zu erhalten, sind das erste mechanische Schwingungsbeeinflussungselement und das zweite mechanische Schwingungsbeeinflussungselement unterschiedlich, also verschieden voneinander, ausgestaltet.

In einer besonders bevorzugten Ausgestaltung ist das zweite mechanische Schwingungsbeeinflussungselement lösbar mit dem Wandlergehäuse des zweiten Ultraschallwandlers verbunden. Besonders bevorzugt ist das mechanische Schwingungsbeeinflussungselement durch eine Steckverbindung oder eine Schraubverbindung mit dem Wandlergehäuse verbunden. Ebenfalls bevorzugt ist in einer anderen Variante die Verbindung zwischen Wandlergehäuse und Schwingungsbeeinflussungselement durch eine Rastverbindung oder eine Bajonettverbindung realisiert. In einer alternativen Ausgestaltung ist das zweite mechanische Schwingungsbeeinflussungselement unlösbar mit dem Wandlergehäuse des zweiten Ultraschallwandlers verbunden. Besonders bevorzugt ist eine derartige unlösbare Verbindung durch eine Schweißverbindung oder eine Pressverbindung realisiert. In einer alternativen Variante ist das mechanische Schwingungsbeeinflussungselement einstückig mit dem Wandlergehäuse ausgebildet.

Zur Ausgestaltung des zweiten mechanischen Schwingungsbeeinflussungselements gibt es erfindungsgemäß verschiedene Varianten. Besonders bevorzugt ist das zweite mechanische Verbindungselement wie zuvor im Zusammenhang mit dem ersten mechanischen Schwingungsbeeinflussungselement beschrieben, ausgestaltet. Sämtliche zuvor im Zusammenhang mit dem ersten Schwingungsbeeinflussungselement gemachten Ausführungen gelten entsprechend auch für das zweite mechanische Schwingungsbeeinflussungselement. Insbesondere kann das zweite mechanische Schwingungsbeeinflussungselement als Hülse ausgebildet sein, weiter bevorzugt als Federelement oder als Massering, oder als Hülse mit vertikalen Aussparungen.

Bei dem erfindungsgemäßen Ultraschalldurchflussmessgerät können beispielsweise folgende Situationen realisiert sein:
- Der erste Ultraschallwandler weist ein mechanisches Schwingungsbeeinflussungselement auf, der zweite Ultraschallwandler weist kein mechanisches Schwingungsbeeinflussungselement auf.
- Der erste Ultraschallwandler weist ein mechanisches Schwingungsbeeinflussungselement auf und der zweite Ultraschallwandler weist ein mechanisches Schwingungsbeeinflussungselement auf, das von dem mechanischen Schwingungsbeeinflussungselement des ersten Ultraschallwandlers verschieden ausgestaltet ist.

Weisen sowohl der erste als auch der zweite Ultraschallwandler ein mechanisches Schwingungsbeeinflussungselement auf, so können beispielsweise beide Ultraschallwandler als Federelemente ausgestaltete mechanische Schwingungsbeeinflussungselemente aufweisen, wobei die beiden Federelemente unterschiedlich realisiert sind. In einer anderen Ausgestaltung können beide Ultraschallwandler als Masseringe realisierte Schwingungsbeeinflussungselmeente aufweisen, wobei die Masseringe beispielsweise verschiedene Dicken oder Längserstreckungen aufweisen können, um unterschiedlich voneinander realisiert zu sein. Ebenfalls denkbar ist, dass beide Ultraschallwandler Hülsen mit vertikalen Materialaussparungen als mechanische Schwingungsbeeinflussungselemente aufweisen. Hier können beispielsweise die Materialaussparungen andersartig ausgebildet sein oder in verschiedener Anzahl vorgesehen sein. Ebenfalls bevorzugt sind Ausführungsformen, bei denen das mechanisches Schwingungsbeeinflussungselement des ersten Ultraschallwandlers als Federelement ausgebildet ist und das mechanisches Schwingungsbeeinflussungselement des zweiten Ultraschallwandlers als Hülse mit geschlossener Oberfläche oder als Hülse mit vertikalen Materialaussparungen ausgebildet ist, oder eine Ausgestaltung, bei der das mechanisches Schwingungsbeeinflussungselement des ersten Ultraschallwandlers als Hülse mit geschlossener Oberfläche und das mechanisches Schwingungsbeeinflussungselement des zweiten Ultraschallwandlers als Hülse mit vertikalen Materialaussparungen ausgebildet ist.

Im Einzelnen gibt es eine Vielzahl von Möglichkeiten, das erfindungsgemäße Ultraschalldurchflussmessgerät auszugestalten und weiterzubilden. Dazu wird verwiesen auf die dem Patentanspruch 1 nachgeordneten Patentansprüche in Verbindung mit der Zeichnung. In der Zeichnung zeigen
- Fig. 1: eine schematische Darstellung einer ersten Variante eines Ultraschalldurchflussmessgerätes,
- Fig. 2: eine schematische Darstellung einer zweiten Variante eines Ultraschalldurchflussmessgerätes,
- Fig. 3: eine Darstellung der Frequenzspektren verschiedener Ultraschallwandler,
- Fig. 4: eine Darstellung von Messsignalen,
- Fig. 5: eine Darstellung einer ersten Variante eines Ultraschallwandlers,
- Fig. 6: eine Darstellung einer zweiten Variante eines Ultraschallwandlers,
- Fig. 7: eine Darstellung einer ersten Variante eines mechanischen Schwingungsbeeinflussungselements,
- Fig. 8: eine Darstellung einer zweiten Variante eines mechanischen Schwingungsbeeinflussungselements und
- Fig. 9: eine Darstellung einer dritten Variante eines mechanischen Schwingungsbeeinflussungselements.

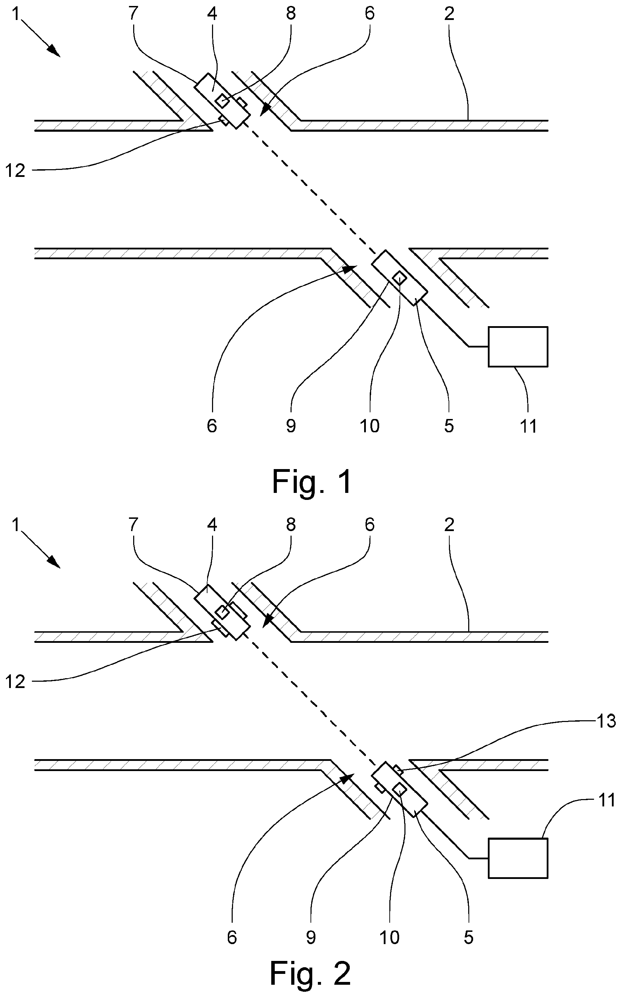

Fig. 1 zeigt eine schematische Darstellung eines Ultraschalldurchflussmessgerätes 1, das zur Bestimmung des Durchflusses eines durch das Messrohr 2 strömenden Mediums ausgebildet ist. Das Ultraschalldurchflussmessgerät 1 weist ein Ultraschallwandlerpaar 3 bestehend aus einem ersten Ultraschallwandler 4 und einen zweiten Ultraschallwandler 5 auf. Sowohl der erste Ultraschallwandler 4 als auch der zweite Ultraschallwandler 5 sind beide sowohl zum Senden als auch zum Empfangen von Ultraschallsignalen ausgebildet. Die beiden Ultraschallwandler 4, 5 sind in der dargestellten Ausführungsform auf einander gegenüberliegenden Seiten des Messrohres 2 in Wandlertaschen 6 angeordnet. Der erste Ultraschallwandler 4 weist ein ersten Wandlergehäuse 7 auf, in dem ein erstes Wandlerelement 8 zum Erzeugen und/oder zum Empfangen von Ultraschallsignalen angeordnet ist. Der zweite Ultraschallwandler 5 weist ein zweites Wandlergehäuse 9 auf, in dem ein zweites Wandlerelement 10 angeordnet ist. Sowohl das erste Wandlergehäuse 7 als auch das zweite Wandlergehäuse 9 sind zumindest teilweise mechanisch schwingfähig ausgebildet und werden zur Signalabstrahlung bzw. zur Signaleinkopplung zumindest teilweise zu mechanischen Schwingungen angeregt. Zudem weist das Ultraschalldurchflussmessgerät 1 eine Steuer- und Auswerteeinheit 11 zum Steuern der Ultraschallwandler und zum Auswerten eines den Durchfluss charakterisierenden Messsignals auf.

Der erste Ultraschallwandler 4 weist ein erstes mechanisches Schwingungsbeeinflussungselement 12 auf, das zum Beeinflussen des Schwingungsverhaltens des ersten Ultraschallwandlers 4 dient. Das mechanische Schwingungsbeeinflussungselement 12 beeinflusst das Schwingungsverhalten des ersten Ultraschallwandlers 4 derart, dass die Eigenfrequenzen des ersten Ultraschallwandlers 4 relativ zu den Eigenfrequenzen des zweiten Ultraschallwandlers 5 frequenzverschoben sind, derart, dass das den Durchfluss charakterisierende Messsignal, das aus dem den ersten Ultraschallwandler 4 und den zweiten Ultraschallwandler 5 durchlaufenden gesendeten Ultraschallsignal resultiert, breitbandig ist, jedenfalls breitbandiger als nach Durchlaufen nur eines der Ultraschallwandler 4, 5. Das resultierende breitbandigere Messsignal ist messtechnisch leichter zu verarbeiten, als ein schmalbandigeres Messsignal, das aus dem Durchlaufen nur eines der Ultraschallwandler 4,5, oder zweier identisch ausgebildeter Ultraschallwandler 4, 5 resultieren würde.

Fig. 2 zeigt eine schematische Darstellung einer weiteren Ausgestaltung eines Ultraschalldurchflussmessgerätes 1, die sich von der in Fig. 1 dargestellten Variante dadurch unterscheidet, dass der zweite Ultraschallwandler 5 ebenfalls ein mechanisches Schwingungsbeeinflussungselement 13 aufweist. Das mechanische Schwingungsbeeinflussungselement 13 des zweiten Ultraschallwandlers 5 ist andersartig ausgestaltet, als das mechanische Schwingungsbeeinflussungselement 12 des ersten Ultraschallwandlers 4. So kann der Effekt des breitbandigeren Messsignals auch bei dieser Ausgestaltung erzielt werden.

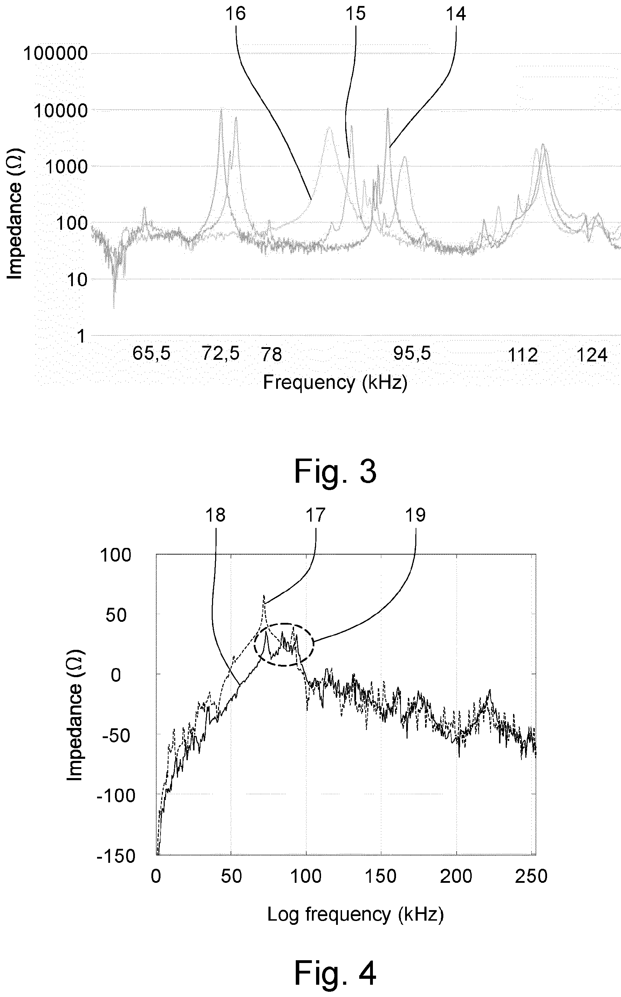

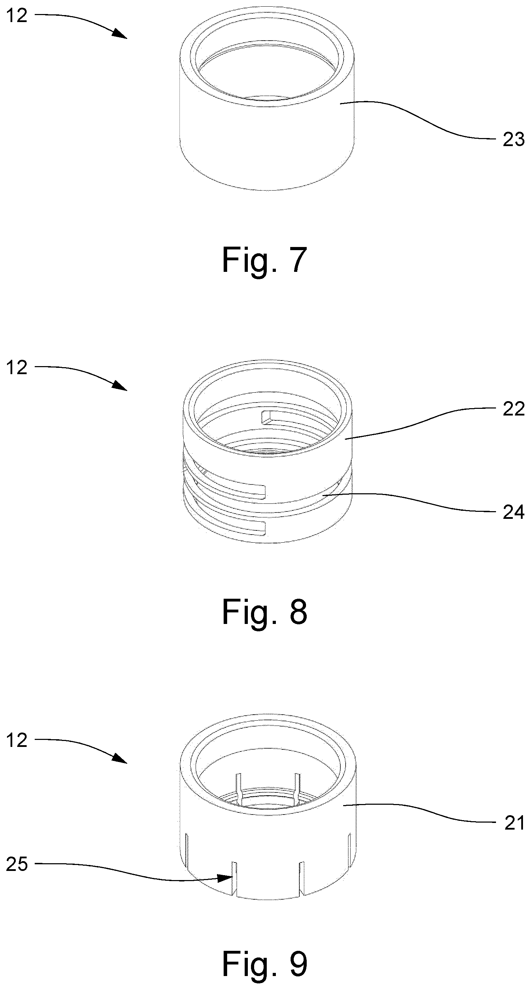

Fig. 3 zeigt ein Diagramm, in dem drei Frequenzspektren 14, 15, 16 eines Ultraschallwandlers dargestellt sind, durch die der Einfluss verschiedener mechanischer Schwingungsbeeinflussungselemente 12, 13 auf das Frequenzspektrum eines Ultraschallwandlers, insbesondere auf die Eigenfrequenzen eines Ultraschallwandlers, verdeutlicht werden. Die verschiedenen Frequenzspektren 14, 15, 16 zeigen das Schwingungsverhalten eines Ultraschallwandlers mit verschiedenen Schwingungsbeeinflussungselementen 12, 13. Frequenzspektrum 14 zeigt das Frequenzspektrum eines Ultraschallwandlers 4 ohne zusätzliches mechanisches Schwingungsbeeinflussungselement 12, 13. Die Eigenfrequenzen liegen vorliegend bei Frequenzen von 72,4 kHz und 92,0 kHz. Frequenzspektrum 15 zeigt das Frequenzspektrum eines Ultraschallwandlers mit einem zusätzlichen mechanischen Schwingungsbeeinflussungselements 12, vorliegend einem wie in Fig. 8 dargestellten Schwingungsbeeinflussungselement 12. Die Eigenfrequenzen liegen hier bei 74,0 kHz und 87,5 kHz, sind also frequenzverschoben gegenüber den Eigenfrequenzen des Ultraschallwandlers 4 ohne Schwingungsbeeinflussungselement. Frequenzspektrum 16 zeigt das Frequenzspektrum eines Ultraschallwandlers mit einem zusätzlichen mechanischen Schwingungsbeeinflussungselement, das jedoch verschieden von dem zuvor angeführten Schwingungsbeeinflussungselement ausgestaltet ist, nämlich vorliegend wie das in Fig. 7 dargestellte Schwingungsbeeinflussungselement ausgestaltet ist. In dem Frequenzspektrum 16 liegt die Eigenfrequenz bei 84,7 kHz. Zudem ist zu erkennen, dass der Eigenfrequenzpeak aufgeweitet ist.

Fig. 4 zeigt eine Darstellung zweier verschiedener Messsignale 17, 18. Messsignal 17 ist hierbei ein Messsignal eines Ultraschalldurchflussmessgerätes 1, bei dem beide Ultraschallwandler 4, 5 kein mechanisches Schwingungsbeeinflussungselement aufweisen und baugleich ausgebildet sind. Das Messsignal 18 hingegen ist das Messsignal eines Ultraschalldurchflussmessgerätes 1, bei dem der erste Ultraschallwandler 4 ein erstes mechanisches Schwingungsbeeinflussungselement 12 aufweist und der zweite Ultraschallwandler 5 ein zweites andersartig ausgestaltetes Schwingungsbeeinflussungselement 13 aufweist. In der Fig. 4 ist deutlich zu erkennen, dass das den Durchfluss charakterisierende Messsignal 18, das aus dem den ersten Ultraschallwandler 4 mit erstem Schwingungsbeeinflussungselement 12 und den zweiten Ultraschallwandler 5 mit zweitem Schwingungsbeeinflussungselement 13 Ultraschallsignal resultiert, breitbandiger ist, als das Messsignal 17. Insbesondere im Bereich zwischen etwa 70kHz und 90kHz bildet das Messsignal 18 ein Plateau 19 aus. Das breitbandige Messsignal 18 ist messtechnisch deutlich besser zu erfassen, als das schmalbandige Messsignal 17.

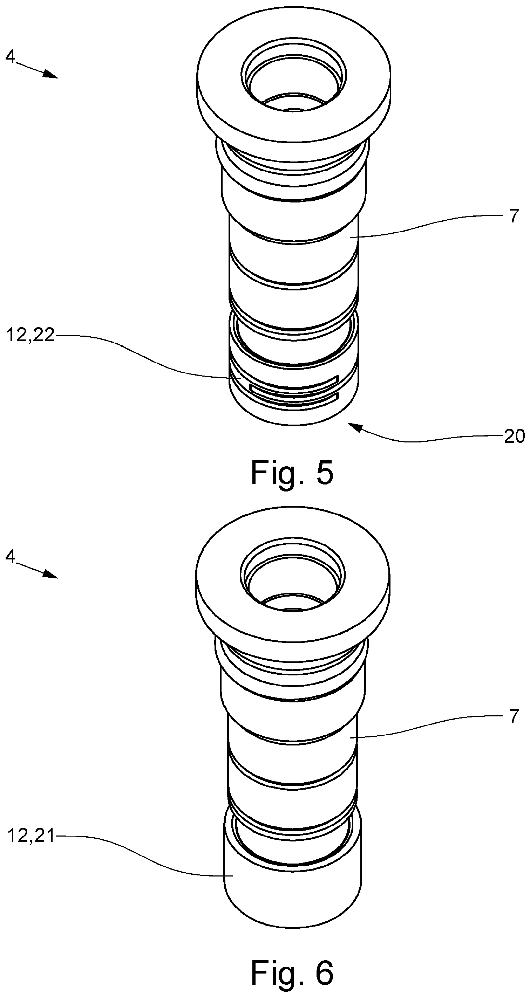

Fig. 5 zeigt eine Darstellung eines Ultraschallwandlers 4 in Draufsicht. Der Ultraschallwandler 4 weist ein Wandlerelement 8 zum Erzeugen und/oder zum EMpfangen von Ultraschallsignalen auf, das in dem Wandlergehäuse 7 angeordnet und in der Fig. 5 nicht sichtbar ist. Zudem weist der Ultraschallwandler 4 ein mechanisches Schwingungsbeeinflussungselement 12 auf, das vorliegend lösbar, nämlich durch eine Schraubverbindung, mit dem Wandlergehäuse 7 verbunden ist. Im Gegensatz dazu ist bei dem in Fig. 1 dargestellten Ultraschallwandler 4 das Schwingungsbeeinflussungselement 12 unlösbar mit dem Wandlergehäuse 7 verbunden, nämlich verschweißt. Zudem ist ersichtlich, dass das mechanische Schwingungsbeeinflussungselement 12 an dem dem Medium zugewandten Ende 20 des Ultraschallwandlers 4 angeordnet ist. Weiterhin zeigt Fig. 5 ein als Hülse 21 und zudem als Federelement 22 ausgebildete Hülse 21 realisiertes Schwingungsbeeinflussungselement 12.

Fig. 6 zeigt eine Darstellung einer weiteren Ausgestaltung eines Ultraschallwandlers 4 in Draufsicht. Im Unterschied zu der in Fig. 5 dargestellten Ausgestaltung ist das mechanische Schwingungsbeeinflussungselement 12 vorliegend als durch einen Massering 23 realisierte Hülse 21 ausgebildet. Der Massering 23 weist in Umfangsrichtung eine geschlossene Oberfläche auf. Der Massering 23 ist durch eine Pressverbindung mit dem Wandlergehäuse 7 verbunden.

Die Fig. 7, 8 und 9 zeigen verschiedene Varianten eines mechanischen Schwingungsbeeinflussungselementes 12. Das in Fig. 7 dargestellte mechanische Schwingungsbeeinflussungselement 12 ist als Massering 23 realisiert. Das in Fig. 8 dargestellte mechanische Schwingungsbeeinflussungselement 12 hingegen ist als Federelement 22 realisiert und weist im Gegensatz zu dem als Massering 23 ausgebildeten Schwingungsbeeinflussungselement 12 Materialausnehmungen 24 auf, die sich zumindest teilweise in Umfangsrichtung erstrecken. Das in Fig. 9 dargestellte Schwingungsbeeinflussungselement 12 ist hingegen als Hülse 21 realisiert, die vertikale Materialaussparungen 25 senkrecht zur Umfangsrichtung der Hülse 21 aufweist.

### Bezugszeichen

- 1: Ultraschalldurchflussmessgerät
- 2: Messrohr
- 3: Ultraschallwandlerpaar
- 4: erster Ultraschallwandler
- 5: zweiter Ultraschallwandler
- 6: Wandlertasche
- 7: erstes Wandlergehäuse
- 8: erstes Wandlerelement
- 9: zweites Wandlergehäuse
- 10: zweites Wandlerelement
- 11: Steuer- und Auswerteeinheit
- 12: erstes Schwingungsbeeinflussungselement
- 13: zweites Schwingungsbeeinflussungselement
- 14: Frequenzspektrum Ultraschallwandler ohne Schwingungsbeeinflussungselement
- 15: Frequenzspektrum Ultraschallwandler mit erstem Schwingungsbeeinflussungselement
- 16: Frequenzspektrum Ultraschallwandler mit zweitem Schwingungsbeeinflussungselement
- 17: schmalbandiges Messsignal Ultraschallwandler ohne Schwingungsbeeinflussungselemente
- 18: breitbandiges Messsignal Ultraschallwandler mit zwei verschiedenen Schwingungsbeeinflussungselementen
- 19: Plateau
- 20: erstes Ende des Ultraschallwandlers
- 21: Hülse
- 22: Federelement
- 23: Massering
- 24: Materialausnehmungen
- 25: Materialaussparungen

## Patentansprüche

1. Ultraschalldurchflussmessgerät (1) zur Bestimmung des Durchflusses eines Mediums, mit wenigstens einem Ultraschallwandlerpaar (3) aufweisend einen ersten Ultraschallwandler (4) und einen zweiten Ultraschallwandler (5), wobei der erste Ultraschallwandler (4) und der zweite Ultraschallwandler (5) zum Senden und/oder zum Empfangen von Ultraschallsignalen ausgebildet sind, wobei der erste Ultraschallwandler (4) ein erstes Wandlergehäuse (7) und ein in dem ersten Wandlergehäuse (7) angeordnetes erstes Wandlerelement (8) zur Erzeugung und/oder zum Empfangen von Ultraschallsignalen aufweist, wobei der zweite Ultraschallwandler (5) ein zweites Wandlergehäuse (9) und ein in dem zweiten Wandlergehäuse (9) angeordnetes zweites Wandlerelement (10) zur Erzeugung und/oder zum Empfangen von Ultraschallsignalen aufweist, wobei das erste Wandlergehäuse (7) und das zweite Wandlergehäuse (9) zumindest teilweise mechanisch schwingfähig ausgebildet sind und zur Signalabstrahlung bzw. Signaleinkopplung zumindest teilweise zu mechanischen Schwingungen angeregt werden, und mit einer Steuer- und Auswerteeinheit (11) zum Steuern der Ultraschallwandler (4, 5) und zum Auswerten eines den Durchfluss charakterisierenden Messsignals,
**dadurch gekennzeichnet,**
**dass** wenigstens der erste Ultraschallwandler (4) ein erstes mechanisches Schwingungsbeeinflussungselement (12) zum Beeinflussen des Schwingungsverhaltens des ersten Ultraschallwandlers (4) aufweist und dass das mechanische Schwingungsbeeinflussungselement (12) das Schwingungsverhalten des ersten Ultraschallwandlers (4) derart beeinflusst, dass die Eigenfrequenzen des ersten Ultraschallwandlers (4) relativ zu den Eigenfrequenzen des zweiten Ultraschallwandlers (5) frequenzverschoben sind, derart, dass das den Durchfluss charakterisierende Messsignal, das aus dem den ersten Ultraschallwandler (4) und den zweiten Ultraschallwandler (5) durchlaufenden gesendeten Ultraschallsignal resultiert, breitbandig ist, jedenfalls breitbandiger als nach Durchlaufen nur eines der Ultraschallwandler (4, 5).

2. Ultraschalldurchflussmessgerät (1) nach Anspruch 1, **dadurch gekennzeichnet, dass** die Eigenfrequenzen des ersten Ultraschallwandlers (4) und des zweiten Ultraschallwandlers (5) im Bereich von 15 Prozent bis 30 Prozent voneinander abweichen.

3. Ultraschalldurchflussmessgerät (1) nach Anspruch 1 oder 2, **dadurch gekennzeichnet, dass** das mechanische Schwingungsbeeinflussungselement (12) lösbar mit dem ersten Wandlergehäuse (4) verbunden ist, insbesondere durch eine Steckverbindung, eine Schraubverbindung, eine Rastverbindung oder eine Bajonettverbindung.

4. Ultraschalldurchflussmessgerät (1) nach Anspruch 1 oder 2, **dadurch gekennzeichnet, dass** das mechanische Schwingungsbeeinflussungselement (12) unlösbar mit dem ersten Wandlergehäuse (4) verbunden ist, insbesondere durch eine Schweißverbindung oder eine Pressverbindung, oder dass das mechanische Schwingungsbeeinflussungselement (12) einstückig mit dem Wandlergehäuse (4) ausgebildet ist.

5. Ultraschalldurchflussmessgerät (1) nach einem der Ansprüche 1 bis 4, **dadurch gekennzeichnet, dass** das mechanische Schwingungsbeeinflussungselement (12) an dem dem Medium zugewandten Ende (20) des Ultraschallwandlers (4) angeordnet ist.

6. Ultraschalldurchflussmessgerät (1) nach einem der Ansprüche 1 bis 5, **dadurch gekennzeichnet, dass** das mechanische Schwingungsbeeinflussungselement (12) als Hülse (21) ausgebildet ist.

7. Ultraschalldurchflussmessgerät (1) nach Anspruch 6, **dadurch gekennzeichnet, dass** die Hülse (21) als Federelement (22) ausgebildet ist, insbesondere dass die Hülse (21) als Spiralfeder, als Torsionsfeder, als Wellenfeder oder als Tellerfeder realisiert ist.

8. Ultraschalldurchflussmessgerät (1) nach Anspruch 6, **dadurch gekennzeichnet, dass** die Hülse (21) als Massering (23) ausgebildet ist, insbesondere wobei der Massering (23) in Umfangsrichtung eine geschlossene Oberfläche aufweist.

9. Ultraschalldurchflussmessgerät (1) nach Anspruch 6, **dadurch gekennzeichnet, dass** die Hülse (21) vertikale Materialaussparungen (25) aufweist, insbesondere wobei die Materialaussparungen (25) senkrecht zur Umfangsrichtung angeordnet sind.

10. Ultraschalldurchflussmessgerät (1) nach einem der Ansprüche 1 bis 9, **dadurch gekennzeichnet, dass** zwischen dem Wandlergehäuse (7) und dem mechanischen Schwingungsbeeinflussungselement (12) ein Dämpfungsmaterial, bevorzugt eine Dämpfungsfolie, angeordnet ist, insbesondere dass das Dämpfungsmaterial Graphit ist.

11. Ultraschalldurchflussmessgerät (1) nach einem der Ansprüche 1 bis 9, **dadurch gekennzeichnet, dass** der zweite Ultraschallwandler (5) ein zweites mechanisches Schwingungsbeeinflussungselement (13) zum Beeinflussen des Schwingungsverhaltens des zweiten Ultraschallwandlers (5) aufweist, und dass das erste mechanische Schwingungsbeeinflussungselement (12) und das zweite mechanische Schwingungsbeeinflussungselement (13) unterschiedlich ausgestaltet sind, insbesondere wobei das zweite mechanische Schwingungsbeeinflussungselement (13) lösbar oder unlösbar mit dem zweiten Wandlergehäuse (9) verbunden ist, weiter insbesondere dass das zweite mechanische Schwingungselement (13) nach einem der Ansprüche 5 bis 9 ausgebildet ist.

## Claims

1. Ultrasonic flowmeter (1) for determining the flow rate of a medium, having at least one ultrasonic transducer pair (3) comprising a first ultrasonic transducer (4) and a second ultrasonic transducer (5), wherein the first ultrasonic transducer (4) and the second ultrasonic transducer (5) are designed for transmitting and/or receiving ultrasonic signals, wherein the first ultrasonic transducer (4) comprises a first transducer housing (7) and a first transducer element (8) arranged in the first transducer housing (7) for generating and/or for receiving ultrasonic signals, wherein the second ultrasonic transducer (5) comprises a second transducer housing (9) and a second transducer element (10) arranged in the second transducer housing (9) for generating and/or receiving ultrasonic signals, wherein the first transducer housing (7) and the second transducer housing (9) are designed to be at least partially capable of mechanical oscillation and are at least partially excited to mechanical oscillations for signal emission or signal coupling, and having a control and evaluation unit (11) for controlling the ultrasonic transducers (4, 5) and for evaluating a measurement signal characterizing the flow rate,
**characterized in**
**that** at least the first ultrasonic transducer (4) has a first mechanical oscillation influencing element (12) for influencing the oscillation behavior of the first ultrasonic transducer (4), and that the mechanical oscillation influencing element (12) influences the oscillation behavior of the first ultrasonic transducer (4) in such a manner that the natural frequencies of the first ultrasonic transducer (4) are frequency-shifted relative to the natural frequencies of the second ultrasonic transducer (5) such that the measurement signal characterizing the flow rate, which results from the transmitted ultrasonic signal passing through the first ultrasonic transducer (4) and the second ultrasonic transducer (5), is broadband, in any case more broadband than after passing through only one of the ultrasonic transducers (4, 5).

2. Ultrasonic flowmeter (1) according to claim 1, **characterized in that** the natural frequencies of the first ultrasonic transducer (4) and the second ultrasonic transducer (5) deviate from each other in the range of 15 percent to 30 percent.

3. Ultrasonic flowmeter (1) according to claim 1 or 2, **characterized in that** the mechanical oscillation influencing element (12) is detachably connected to the first transducer housing (4), in particular by a plug-in connection, a screw connection, a snap-in connection or a bayonet connection.

4. Ultrasonic flowmeter (1) according to claim 1 or 2, **characterized in that** the mechanical oscillation influencing element (12) is non-detachably connected to the first transducer housing (4), in particular by a welded connection or a press connection, or that the mechanical oscillation influencing element (12) is designed integrally with the transducer housing (4).

5. Ultrasonic flowmeter (1) according to any one of claims 1 to 4, **characterized in that** the mechanical oscillation influencing element (12) is arranged at the end (20) of the ultrasonic transducer (4) facing the medium.

6. Ultrasonic flowmeter (1) according to any one of claims 1 to 5, **characterized in that** the mechanical oscillation influencing element (12) is designed as a sleeve (21).

7. Ultrasonic flowmeter (1) according to claim 6, **characterized in that** the sleeve (21) is designed as a spring element (22), in particular that the sleeve (21) is implemented as a spiral spring, as a torsion spring, as a wave spring or as a plate spring.

8. Ultrasonic flowmeter (1) according to claim 6, **characterized in that** the sleeve (21) is designed as a mass ring (23), in particular wherein the mass ring (23) has a closed surface in the circumferential direction.

9. Ultrasonic flowmeter (1) according to claim 6, **characterized in that** the sleeve (21) has vertical material slots (25), in particular wherein the material slots (25) are arranged perpendicular to the circumferential direction.

10. Ultrasonic flowmeter (1) according to any one of claims 1 to 9, **characterized in that** a damping material, preferably a damping foil, is arranged between the transducer housing (7) and the mechanical oscillation influencing element (12), in particular that the damping material is graphite.

11. Ultrasonic flowmeter (1) according to any one of claims 1 to 9, **characterized in that** the second ultrasonic transducer (5) has a second mechanical oscillation influencing element (13) for influencing the oscillation behavior of the second ultrasonic transducer (5), and that the first mechanical oscillation influencing element (12) and the second mechanical oscillation influencing element (13) are designed differently, in particular wherein the second mechanical oscillation influencing element (13) is detachably or non-detachably connected to the second transducer housing (9), further in particular that the second mechanical oscillation influencing element (13) is designed according to any one of claims 5 to 9.

## Revendications

1. Débitmètre à ultrasons (1) pour déterminer le débit d'un fluide, comportant au moins une paire de transducteurs à ultrasons (3) comprenant un premier transducteur à ultrasons (4) et un deuxième transducteur à ultrasons (5), le premier transducteur à ultrasons (4) et le deuxième transducteur à ultrasons (5) étant conçus pour émettre et/ou recevoir des signaux ultrasonores, le premier transducteur à ultrasons (4) comportant un premier boîtier de transducteur (7) et un premier élément transducteur (8) agencé dans le premier boîtier de transducteur (7) pour générer et/ou recevoir des signaux ultrasonores, le deuxième transducteur à ultrasons (5) comportant un deuxième boîtier de transducteur (9) et un deuxième élément transducteur (10) agencé dans le deuxième boîtier de transducteur (9) pour générer et/ou recevoir des signaux ultrasonores, le premier boîtier de transducteur (7) et le deuxième boîtier de transducteur (9) étant au moins partiellement conçus pour vibrer mécaniquement et étant au moins partiellement excités pour des vibrations mécaniques afin de rayonner ou d'injecter des signaux, et comportant une unité de commande et d'évaluation (11) pour commander les transducteurs à ultrasons (4, 5) et pour évaluer un signal de mesure caractérisant le débit,
**caractérisé**
**en ce qu'**au moins le premier transducteur à ultrasons (4) comporte un premier élément mécanique influençant les vibrations (12) pour influencer le comportement vibratoire du premier transducteur à ultrasons (4) et en ce que l'élément mécanique influençant les vibrations (12) influence le comportement vibratoire du premier transducteur à ultrasons (4) de telle sorte que les fréquences propres du premier transducteur à ultrasons (4) soient décalées en fréquence par rapport aux fréquences propres du deuxième transducteur à ultrasons (5), de telle manière que le signal de mesure caractérisant le débit, qui résulte du signal ultrasonore émis à travers le premier transducteur à ultrasons (4) et le deuxième transducteur à ultrasons (5), est à large bande, et dans tous les cas à plus large bande qu'après avoir traversé un seul des transducteurs à ultrasons (4, 5).

2. Débitmètre à ultrasons (1) selon la revendication 1, **caractérisé en ce que** les fréquences propres du premier transducteur à ultrasons (4) et du deuxième transducteur à ultrasons (5) diffèrent l'une de l'autre dans une plage de 15 % à 30 %.

3. Débitmètre à ultrasons (1) selon la revendication 1 ou 2, **caractérisé en ce que** l'élément mécanique influençant les vibrations (12) est relié de manière amovible au premier boîtier de transducteur (4), notamment par une connexion enfichable, une connexion vissée, une connexion à encliquetage ou une connexion à baïonnette.

4. Débitmètre à ultrasons (1) selon la revendication 1 ou 2, **caractérisé en ce que** l'élément mécanique influençant les vibrations (12) est relié de manière non amovible au premier boîtier de transducteur (4), notamment par une connexion soudée ou une connexion par pressage, ou **en ce que** l'élément mécanique influençant les vibrations (12) est formé d'une seule pièce avec le boîtier de transducteur (4).

5. Débitmètre à ultrasons (1) selon l'une quelconque des revendications 1 à 4, **caractérisé en ce que** l'élément mécanique influençant les vibrations (12) est agencé à l'extrémité (20) du transducteur à ultrasons (4) qui est tournée vers le fluide.

6. Débitmètre à ultrasons (1) selon l'une quelconque des revendications 1 à 5, **caractérisé en ce que** l'élément mécanique influençant les vibrations (12) est conçu sous forme de manchon (21).

7. Débitmètre à ultrasons (1) selon la revendication 6, **caractérisé en ce que** le manchon (21) est conçu sous forme d'élément élastique (22), notamment **en ce que** le manchon (21) est réalisé sous forme de ressort hélicoïdal, de ressort de torsion, de ressort ondulé ou de ressort à coupelle.

8. Débitmètre à ultrasons (1) selon la revendication 6, **caractérisé en ce que** le manchon (21) est conçu sous forme de bague de masse (23), ladite bague de masse (23) présentant notamment une surface fermée dans la direction circonférentielle.

9. Débitmètre à ultrasons (1) selon la revendication 6, **caractérisé en ce que** le manchon (21) présente des évidements de matériau verticaux (25), lesdits évidements de matériau (25) étant notamment agencés perpendiculairement à la direction circonférentielle.

10. Débitmètre à ultrasons (1) selon l'une quelconque des revendications 1 à 9, **caractérisé en ce qu'**un matériau d'amortissement, de préférence une feuille d'amortissement, est agencé entre le boîtier de transducteur (7) et l'élément mécanique influençant les vibrations (12), ledit matériau d'amortissement étant notamment du graphite.

11. Débitmètre à ultrasons (1) selon l'une quelconque des revendications 1 à 9, **caractérisé en ce que** le deuxième transducteur à ultrasons (5) comporte un deuxième élément mécanique influençant les vibrations (13) pour influencer le comportement vibratoire du deuxième transducteur à ultrasons (5), et **en ce que** le premier élément mécanique influençant les vibrations (12) et le deuxième élément mécanique influençant les vibrations (13) sont conçus différemment, ledit deuxième élément mécanique influençant les vibrations (13) étant relié de manière amovible ou non amovible au deuxième boîtier de transducteur (9), ledit deuxième élément de vibration mécanique (13) étant en outre notamment conçu selon l'une quelconque des revendications 5 à 9.
